(19) Europäisches Patentamt
European Patent Office
Office européen des brevets

(11)   **EP 2 987 998 B1**

(12)   **EUROPÄISCHE PATENTSCHRIFT**

(45) Veröffentlichungstag und Bekanntmachung des Hinweises auf die Patenterteilung:
**02.01.2019   Patentblatt 2019/01**

(51) Int Cl.:
*F03B 17/06* (2006.01)       *F03B 17/00* (2006.01)
*H02N 2/18* (2006.01)

(21) Anmeldenummer: **15180450.7**

(22) Anmeldetag: **10.08.2015**

(54) **VORRICHTUNG ZUM DIREKTEN UMWANDELN VON KINETISCHER ENERGIE EINER STRÖMENDEN FLÜSSIGKEIT IN ELEKTRISCHE ENERGIE**

DEVICE FOR DIRECTLY CONVERTING KINETIC ENERGY OF A FLOWING LIQUID INTO ELECTRICAL ENERGY

DISPOSITIF DE CONVERSION DIRECTE D'ENERGIE CINETIQUE D'UN FLUX DE LIQUIDE EN ENERGIE ELECTRIQUE

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **20.08.2014   DE 102014111929**

(43) Veröffentlichungstag der Anmeldung:
**24.02.2016   Patentblatt 2016/08**

(73) Patentinhaber: **Fraunhofer-Gesellschaft zur Förderung der angewandten Forschung e.V. 80686 München (DE)**

(72) Erfinder:
• **Gerlach, Thomas**
  **97422 Schweinfurt (DE)**
• **Bauer, Frank**
  **97082 Würzburg (DE)**
• **Dorbath, Ingo**
  **97877 Wertheim (DE)**

(74) Vertreter: **Strehl Schübel-Hopf & Partner Maximilianstrasse 54 80538 München (DE)**

(56) Entgegenhaltungen:
DE-A1-102006 040 101       DE-A1-102009 053 393
DE-A1-102010 018 378       US-A- 6 011 346
US-A1- 2001 035 723       US-A1- 2014 042 751

**Beschreibung**

Die vorliegende Erfindung ist auf die Nutzung kinetischer Energie einer strömenden Flüssigkeit, insbesondere von Wasser, gerichtet, wobei diese unmittelbar in speicherbare elektrische Energie umgewandelt wird. Die Erfindung ist geeignet, selbst bei kleinsten Strömungsgeschwindigkeiten von Flüssen oder Bächen kinetische Energie des Wassers in nutzbare Energie umzuwandeln, wobei ein besonderer Vorteil darin liegt, dass kontinuierliche oder diskontinuierliche Schwankungen in der Strömungsgeschwindigkeit für das Verfahren und die hierfür entwickelte Vorrichtung kein Problem darstellen. Die Umwandlung der kinetischen Energie in elektrische Energie erfolgt dabei über den Einsatz einer oder mehrerer dehnbarer, elektroaktiver Polymerfolien (sogenannter dielektrischer Elastomerfolien, die beidseitig mit flächigen Elektroden belegt sind), die in gedehntem Zustand mit elektrischer Energie beaufschlagt und sodann in einen ungedehnten oder weniger gedehnten Zustand zurückgeführt werden. Die dabei auftretende Verdickung der Folie steigert deren Ladungsenergie, und der dabei entstehende Energiegewinn kann einer Speichereinheit für elektrische Energie, beispielsweise einem Akkumulator oder einem Kondensator, zugeführt werden.

Bekannt nach dem Stand der Technik ist das Prinzip der hydraulischen Widderpumpen. Sie nutzen die Kraft des Gefälles einer Wasserströmung aus, um einen kleinen Teil des durchfließenden Wassers (ca. 30%) mit Hilfe von zwei Ventilen (Stoß- und Rückschlagventil) und einem Windkessel stoßweise in einem Steigrohr in die Höhe zu drücken. Je stärker der Druck des durchfließenden Wassers ist, umso größer ist die gehobene Wassermenge bzw. umso höher lässt sich das Wasser heben. Dabei weist die Widderpumpe einen Wasserbehälter auf, in dem sich Wasser sammelt. Dieser Behälter befindet sich über dem Widder und ist mit einer Treibwasserleitung verbunden. Ein Stoßventil öffnet sich bei einem bestimmten Fließdruck und schließt sofort wieder. Durch das schlagartige Schließen entsteht ein Druckstoß, der das Wasser durch das Rückschlagventil in einen Windkessel und weiter durch eine Steigleitung nach oben stößt. Wenn der Wasserfluss stark genug wird, dann drückt dieser das Stoßventil zu.

Weiterhin sind Wellenenergieabsorber bekannt, die mit Hilfe eines schwimmenden Zylinders Energie erzeugen, der nach dem Prinzip des "Bristol Zylinders" arbeitet: Die Rotationsbewegung von Wassermolekülen in einer Welle wird ausgenutzt, um den Zylinder in eine Drehung (Orbitalbewegung) zu versetzen. Ein solcher Zylinder kann, wie beispielsweise in WO 2010/136100 beschrieben, mit einem Abtrieb gekoppelt werden, an dem die Umlaufbewegung in ein Drehmoment umgesetzt wird. An eine Welle des Abtriebs kann dann eine Energieumwandlungsmaschine, beispielsweise ein Generator, angekoppelt werden.

Aus EP 2 256 337 A1 ist ein vergleichbarer Wellenenergie-Generator bekannt, der auch extremen Wetterbedingungen standhält und den jeweils herrschenden Bedingungen angepasst werden kann. Kern der in dieser Druckschrift beschriebenen Erfindung ist die Verwendung einer langgestreckten "Blase" als (Bristol-)Zylinder, deren Volumen mithilfe eines Druckventils vergrößert oder verkleinert werden kann, um verschieden starken Wellenbewegungen standzuhalten. Um eine solche Volumenänderung möglich zu machen, besteht die Hülle der Blase aus einem expandierbaren Material, insbesondere einem dehnbaren dielektrischen Material. Mit einer Pumpvorrichtung (die aus gewonnener Energie gespeist werden kann) wird das Element mit Fluid beaufschlagt; wenn eine vorgegebene maximale Dehnungsspannung erreicht ist, wird ein Entlastungsventil geöffnet, um Fluid aus der Blase abzuleiten und ihr Volumen wieder zu verkleinern. Das dielektrische Material dient als Generator und Aktuator für die erforderliche Volumen-Kontroll-Strategie. Die Möglichkeit, Energie auch aus den Flächenveränderungen der Zylinder zu gewinnen, wenn ein dehnbares dielektrisches Material eingesetzt wird, wird unter Bezugnahme auf Stand der Technik erwähnt, ohne dass hierzu konkrete Angaben gemacht würden.

Aus der DE 10 2009 053 393 A1 ist ein weiterer Wellenenergietransformer bekannt. Dieser besitzt eine elektroaktive Polymerfolie und reagiert passiv auf die Druckunterschiede, die in seinem fest am Meeresgrund verankerten Hohlkörper durch die Wellenbewegung des Meeres hervorgerufen werden.

Weiterhin ist aus dem Stand der Technik die Druckschrift DE 10 2006 040 101 A1 bekannt. In dieser Druckschrift wird ein Druckrohr für eine Stromerzeugungs-Anlage beschrieben. Dabei ist das Druckrohr am unteren Ende bis auf eine Öffnung zum Strömungskanal verschlossen und über dem Wasserspiegel offen ausgestaltet, wobei am Strömungskanal eine Gleichdruck-Aktionsturbine und daran ein Generator angeschlossen sind. Das Meerwasser fließt infolge des Eigendrucks durch die Öffnung im unteren Bereich des Druckrohres in den Strömungskanal und wandelt den Meerwasserdruck in kinetische Energie um, wobei diese in der Gleichdruck-Aktionsturbine in Rotations-Energie umgewandelt wird. Eine weitere Vorrichtung ist aus DE 10 2010 018 0378 A1 bekannt.

Es ist die Aufgabe der vorliegenden Erfindung, eine Vorrichtung zur Umwandlung der kinetischen Energie eines strömenden Mediums wie fließenden Wassers, beispielsweise in Bächen, Flüssen oder Meerengen, aufzufinden. Die kinetische Energie von fließendem Wasser unterscheidet sich von derjenigen von Wellen u.a. dadurch, dass sie unabhängig von der Nähe zur Wasseroberfläche genutzt werden kann, wobei jedoch eine auf Rotationsbewegungen beruhende Energiegewinnung wie beim "Bristol Zylinder" nicht möglich ist. Die kinetische Energie des Wassers soll erfindungsgemäß nicht erst in eine andere Form von kinetischer Energie überführt werden, beispielsweise in die Drehbewegung einer Turbine oder eines Zylinders und dann weiter in einen Generator, sondern sie soll unmittelbar durch ein einzelnes Bauteil (DEA, Dezentrale Erzeugungsanlage) in elektrische Energie umgewandelt werden, um durch die doppelte Umwandlung entstehende Verluste zu vermeiden. Auch Energieverluste, die durch die Anwendung von (zusätzlich wartungsanfälligen) Pumpen oder dgl. entstehen, sollen vermieden werden. Dabei soll die Erfindung auch für die Energiegewinnung im "kleinen" Maßstab, z.B. für die Energieversorgung von an Bächen liegenden Gehöften abseits der Zivilisation, geeignet sein und daher einen simplen, auf die verschiedensten Größenbereiche anwendbaren Aufbau haben.

In Lösung dieser Aufgabe stellt die Erfindung eine Druckrohrvorrichtung bereit, bei der die Strömungsgeschwindigkeit einer in ein Rohr eintretenden Flüssigkeit, z.B. die eines Fließgewässers, dazu verwendet wird, um einen Überdruck oder einen Unterdruck zu erzeugen. Dabei kann es sich um eine intermittierende Druckveränderung, beispielsweise einen Druckstoß handeln, der durch das Öffnen oder Schließen eines endseitig am Rohr angebrachten Ventils ausgelöst werden kann. Ein schlagartiger Schließvorgang bewirkt einen Druckstoß und damit einen Druckanstieg. Ein schlagartiges Öffnen des Ventils bewirkt einen Druckabfall. Alternativ kann die Druckveränderung permanent bewirkt werden, z.B. durch die Verlangsamung oder Beschleunigung der Flüssigkeit innerhalb des Rohres infolge einer Verengung/Aufweitung des Querschnitts des Rohres. Ein sich verengender Querschnitt führt nach Art einer Venturi-Pumpe zu einem Druckabfall. Der Überdruck oder Unterdruck wird genutzt, um eine dielektrische Elastomerfolie (eine Folie aus einem elektrisch isolierenden Elastomermaterial, die beidseitig mit Elektroden beschichtet ist) zu dehnen. Am Ende des Dehnungsvorgangs wird ein Ausgleichsventil aktiviert, das die Druckdifferenz gegenüber der Umgebung wieder ausgleicht, so dass die dielektrische Elastomerfolie in ihren vorherigen, ungedehnten oder weniger gedehnten Zustand zurückkehrt. Elektrische Energie wird dadurch gewonnen, dass die dielektrische Elastomerfolie im gedehnten Zustand mit elektrischer Energie beaufschlagt wird. Zieht sich die Elastomerfolie durch das Öffnen des Ausgleichsventils und damit den Abbau der Druckdifferenz (Überdruck oder Unterdruck gegen ein äußeres Gas-Kompartiment) wieder zusammen, so erhöht sich die elektrische Energie. Der Energiegewinn kann entnommen werden.

Die erfindungsgemäße Druckrohrvorrichtung ist in Anspruch 1 angegeben; sie umfasst die folgenden Komponenten:

(a) ein Rohr (1) zum waagrechten Anordnen in einem Gewässer mit

- einem ersten Abschnitt (1a), der das Einströmen von fließendem Wasser ermöglicht, und
- einem zweiten Abschnitt (1b), der so ausgestaltet ist, dass einströmendes Wasser einer permanenten oder intermittierenden Druckveränderung unterworfen werden kann,

(b) mindestens einen Ausgleichsbehälter (3), der mit einem dritten Abschnitt (1c) des Rohres derart verbunden ist, dass er bei waagrechter Anordnung des Rohres nach oben ausgerichtet werden kann, und der

- mindestens eine Öffnung, die dichtend mit einer dielektrischen Elastomerfolie (5) verschlossen ist, und
- ein Ausgleichsventil (6) aufweist,

wobei die dielektrische Elastomerfolie im Betrieb über einen Stromkreis mit einer Energiequelle und einen Energiespeicher verbunden ist, derart, dass sie mit elektrischer Ladung beaufschlagt werden und elektrische Energie an den Energiespeicher abgeben kann. Die Energiequelle und der Energiespeicher können gegebenenfalls Teil einer einzigen Einrichtung sein, beispielsweise eines Akkumulators. Alternativ kann die Energie auch z.B. auf einen Kondensator aufgebracht oder in ein Netz mit daran angeschlossenen Verbrauchern eingespeist werden. Im letzteren Fall kann natürlich die für den Betrieb der Vorrichtung benötigte (Anfangs-)Energie auch einem Netzteil entnommen werden.

Die mit einer dielektrischen Elastomerfolie verschlossene(n) Öffnung(en) werden in der Druckrohrvorrichtung so angeordnet, dass sie im Betrieb der Vorrichtung in der Regel über den Wasserspiegel hinausragen.

Das Verfahren umfasst die folgenden grundlegenden Schritte:

(a) Das Bereitstellen eines Raums, dessen Wandung mindestens eine mit einer dielektrischen Elastomerfolie gegenüber einer Umgebung dichtend verschlossene Öffnung besitzt, und anschließend in der angegebenen Reihenfolge:
(b) Das Erzeugen einer Druckdifferenz, d.h. eines Unterdrucks oder eines Überdrucks in diesem Raum relativ zu einem in der Umgebung herrschenden Druck derart, dass sich die Elastomerfolie aufgrund des dadurch verursachten Druckunterschieds nach innen oder nach außen wölbt und dabei dehnt, wobei sich ihre Dicke verringert,
(c) das Beaufschlagen der gewölbten/gedehnten dielektrischen Elastomerfolie mit einer elektrischen Ladung,
(d) das Ausgleichen des Drucks in dem genannten Raum gegenüber dem jenseits der Elastomerfolie herrschenden Druck, wobei sich die dielektrische Elastomerfolie entspannt, dabei zusammenzieht und dicker wird, und
(e) die Entnahme von elektrischer Ladung von der Elastomerfolie.

Die Schritte (b) bis (e) werden vorzugsweise mehrfach bzw. vielfach wiederholt.

Durch das erfindungsgemäße Prinzip wird der Aufbau und Abbau einer Druckdifferenz zur direkten Gewinnung elektrischer Energie genutzt, indem der Aufbau der Druckdifferenz eine dielektrische Elastomerfolie dehnt und ein Gewinn an elektrischer Energie durch das Entspannen der mit elektrischer Ladung versehenen Folie erzielt wird. Die Druckdifferenz wird ihrerseits vorzugsweise aus kinetischer Energie gewonnen, die in der Fließbewegung des Wassers enthalten ist. Sie wird durch den mit Hilfe der Fließgeschwindigkeit erzeugten Unter- oder Überdruck für die Dehnung des Elastomers genutzt und dabei unmittelbar in elektrische Energie umgewandelt. Es gibt insgesamt drei verschiedene Funktionsweisen, um durch die Dehnung der Elastomerfolien elektrische Energie zu gewinnen: Das Prinzip der konstanten Ladung, der konstanten Spannung und das Prinzip der konstanten Feldstärke. Erfindungsgemäß erfolgt der Energiegewinn bevorzugt über das Prinzip der konstanten Feldstärke.

Das Verfahrensprinzip wird vorzugsweise mit einem Hohlkörper durchgeführt, dessen Inneres den zur Verfügung gestellten Raum darstellt und dessen Wandung neben der mindestens einen mit einer dielektrischen Elastomerfolie gegenüber einer Umgebung dichtend verschlossenen Öffnung vorzugsweise eine absperrbare Verbindung zu dieser Umgebung, beispielsweise ein Ventil, aufweist. Der Ausgleich des Drucks gemäß Verfahrensschritt (d) erfolgt dabei vorzugsweise aktiv, nämlich durch das Öffnen der absperrbaren Verbindung,

Insbesondere ist der Hohlkörper so ausgestaltet, dass er von einem Fluid, insbesondere von einer Flüssigkeit durchströmbar ist, wobei dieses Fluid einer aktiven oder passiven Druckveränderung ausgesetzt werden kann. "Aktiv" soll dabei bedeuten, dass der Druck zu einem bestimmten Zeitpunkt durch eine aktive Veränderung der Bedingungen, z.B. des Strömungsquerschnitts, an einem bestimmten Ort des Hohlkörpers verändert wird, während "passiv" bedeuten soll, dass die Druckveränderung des Fluids beim Durchströmen des Hohlkörpers durch dessen konstruktive Anordnung (einen sich in Strömungsrichtung verändernden Durchschnitt) bewirkt wird. Die aktive Druckveränderung ist in der Regel eine intermittierende Druckveränderung wie ein Druckstoß, hervorgerufen von einer aktiv bewirkten bzw. plötzlichen Querschnittsveränderung, insbesondere dem abwechselnden Öffnen und Schließen eines Ventils, während die passive Druckveränderung keine Manipulation am Hohlkörper erfordert, so dass sie permanent sein kann.

Insbesondere ist die erfindungsgemäße Druckrohrvorrichtung zur Durchführung des genannten Verfahrens geeignet und so ausgestaltet, dass sie die durch das Rohr hindurchströmende Flüssigkeit einer Druckveränderung aussetzen kann, wobei diese Druckveränderung intermittierend oder permanent sein kann.

Ein Beispiel für die Erzeugung einer intermittierenden Druckveränderung in der Druckrohrvorrichtung ist der genannte Druckstoß. Druckstöße können durch das abwechselnde Öffnen und Schließen eines Ventils herbeigeführt werden, welches sich stromabwärts der Eintrittsöffnung des Rohres befindet. Beim Schließen des Ventils entsteht eine Druckwelle, die sich in Gegenrichtung zur Fließrichtung im Rohr ausbreitet. Unter Druck stehendes Wasser im dritten Abschnitt des Druckrohrs strömt in den Ausgleichsbehälter, wobei dieser vorzugsweise so ausgestaltet ist, dass dieses Wasser nicht bis an die mit der Elastomerfolie versehene Öffnung gelangt. Der Gasraum im Ausgleichsbehälter wird hierdurch ebenfalls unter Druck gesetzt und bläht die Elastomerfolie auf, die dabei ihre Oberfläche vergrößert. Da der Druck im Rohr nur eine gewisse Zeit zur Verfügung steht (das Ventil soll ja möglichst bald wieder geöffnet und wiederum geschlossen werden, um weitere Druckstöße zu erzeugen), müssen Maßnahmen ergriffen werden, um den Druck im Ausgleichsbehälter aufrechtzuerhalten, sofern nicht bereits ein einziger Druckstoß einen so hohen Druck des Gasraums erzeugt, dass die Elastomerfolie bis zu ihrem Maximum oder zumindest bis zu einem wünschenswerten Grad gedehnt wird. Dies gelingt beispielsweise, indem in einem unteren Bereich des Ausgleichsbehälters ein Überdruckventil vorgesehen wird, das ein Zurückfließen des Fluids (Wasser oder Luft) verhindert, wenn das Schließventil wieder geöffnet wird. Weitere Schließvorgänge dieses Ventils erzeugen weitere Druckstöße, die den Druck im Ausgleichsbehälter weiter erhöhen, bis die gewünschte bzw. die maximale Dehnung der Elastomerfolie erreicht ist.

Alternativ kann eine permanente Druckveränderung herbeigeführt werden. Dies gelingt beispielsweise, indem sich der Durchmesser des Druckrohrs in seinem zweiten Abschnitt verengt, insbesondere durch das Vorsehen einer konvexen konischen Verengung (zur Vermeidung unnötiger Turbulenzen) nach Art eines Venturi-Ventils. Im Engstellenbereich erhöht sich die Fließgeschwindigkeit des durchströmenden Wassers und erzeugt einen Unterdruck im nachfolgenden dritten Abschnitt des Rohres, so dass sich der Druck im Ausgleichsbehälter ebenfalls vermindert. Aufgrund der Druckdifferenz nach außen wölbt sich die Elastomerfolie dabei nach innen und wird dabei gedehnt.

Wenn die dielektrische Elastomerfolie den gewünschten, möglichst maximalen Dehnungszustand erreicht hat, wird sie mit einer elektrischen Ladung beaufschlagt. Hierfür sind die flächigen Elektroden, die sich beidseits des dielektrischen Kerns der Folie befinden, mit einem Stromkreis verbunden, der eine Stromquelle sowie eine Stromspeichereinrichtung aufweist. Bei der Stromspeichereinrichtung kann es sich beispielsweise um einen Kondensator oder einen Akkumulator handeln, die gleichzeitig auch als Stromquelle verwendet werden können.

Nach dem Aufbringen der elektrischen Ladung wird die dielektrische Elastomerfolie teilweise oder vollständig entspannt. Günstig ist eine nur teilweise Entspannung (wie auch eine entsprechende Vorspannung der elektroaktiven Elastomerfolie zu Beginn des Zyklus'), weil dies die Verhinderung von Kontakten möglicherweise dicht nebeneinanderliegender Folien und damit eines Kurzschlusses fördert und dem Zusammenziehen der Folie beim elektrischen Beladen entgegenwirkt.

Der entspannten Elastomerfolie werden die zuvor aufgebrachte und die gewonnene elektrische Energie entnommen.

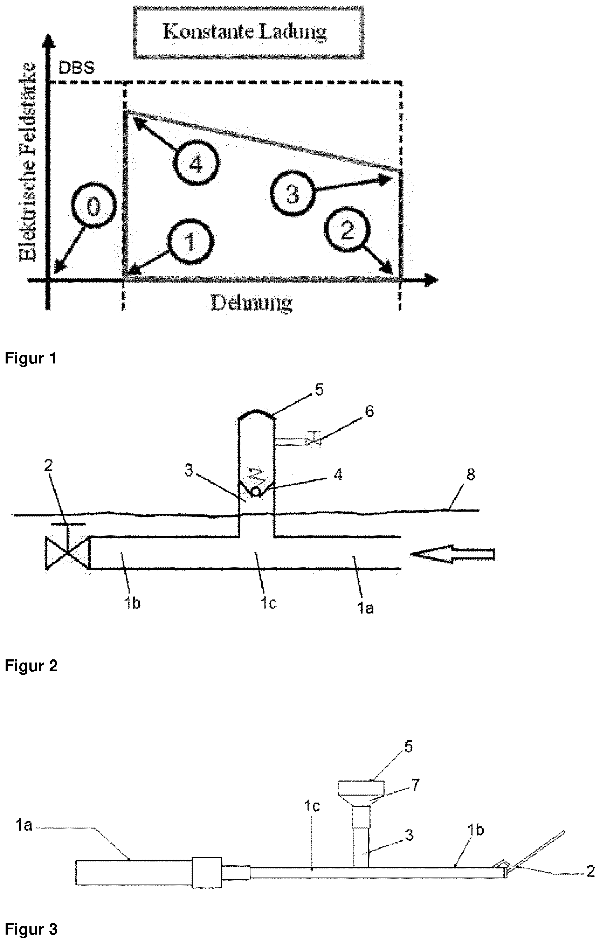

**Figur 1** veranschaulicht die Funktionsweise der Energieumwandlung am Prinzip der konstanten Ladung. Das Prinzip der konstanten Ladung ist einfach zu regeln und erzielt den größten Energiegewinn im Vergleich zu den anderen Betriebsarten. Es wird deswegen auch bei der erfindungsgemäßen Druckrohrvorrichtung bevorzugt angewendet.

Wann der Zeitpunkt bzw. der Dehnungszustand der dielektrischen Elastomerfolie erreicht ist, an dem die elektrische Ladung aufgebracht werden soll, kann auf verschiedenen Wegen ermittelt werden. Wenn das Verhalten der eingesetzten Überdruck- bzw. Unterdruckvorrichtung bekannt ist derart, dass eine bestimmte Anzahl von Druckstößen oder ein bestimmter Fließzeitraum des sich beschleunigenden Wassers zu einer bestimmten Dehnung bzw. der Maximaldehnung der Elastomerfolie führt, kann eine Bestimmung von deren Dehnungszustand gegebenenfalls unterbleiben. Alternativ kann der Dehnungszustand auf unterschiedliche Weise ermittelt werden. Ein Beispiel nutzt eine Lichtschranke, in die sich bildende Wölbung der Elastomerfolie hineinragt. Wird der Lichtstrahl unterbrochen, befindet sich die Elastomerfolie in gedehntem Zustand, und die Beaufschlagung der Elektroden der Elastomerfolie mit elektrischer Ladung wird in Gang gesetzt. Alternativ kann der Zustand der maximalen Dehnung auch mit einem Drucksensor detektiert werden.

Punkt 0 in Figur 1 ist der Zustand einer ungespannten und ungeladenen dielektrischen Elastomerfolie. Aus den oben genannten Gründen wird die Folie mit einer gewissen mechanischen Vorspannung versehen, bevor sie dem Verfahren unterworfen wird. Das bedeutet, dass sie in der Regel mit dieser Vorspannung auf die Öffnung im Ausgleichsbehälter bzw. auf einen auf dieser Öffnung sitzenden Halter aufgebracht und dort befestigt wird. Dies wird durch Punkt 1 veranschaulicht. Zwischen den Punkten 1 und 2 dehnt sich die Folie durch die aufgebrachte intermittierende oder permanente Druckdifferenz (als Überdruck oder Unterdruck) bis zum maximalen Dehnungszustand (Punkt 2) und wird in diesem Zustand mit einer Ladespannung von mehreren kV, abhängig vom Material der Folie, versehen (Punkt 3). Je größer die Ladespannung, desto mehr Energie kann gewonnen werden. Während des Entspannungsvorgangs zwischen Punkt 3 und Punkt 4 bleibt die Anzahl der Ladungen nach Gleichung 1 mit dem Volumen des Elastomers $V_{Elastomer}$ konstant. Die Spannung des Kondensators $U_{Kondensator}$ verändert sich hierbei.

$$q = \frac{\varepsilon_0 \cdot \varepsilon_r}{V_{Elastomer}} \cdot A_{Kondensator}^2 \cdot U_{Kondensator} = const. \qquad (1)$$

mit:

| | |
|---|---|
| $q$: | Elektrische Ladung [A*s] |
| $\varepsilon_0$: | Elektrische Feldkonstante [As/Vm] |
| $\varepsilon_r$: | relative Permittivität [-] |
| $V_{Elastomer}$: | Volumen des Elastomers [m$^3$] |
| $A_{Kondensator}$: | Fläche des Kondensators [m$^2$] |
| $U_{Kondensator}$: | Spannung des Kondensators [V] |

Die Differenz zwischen der Ladungsenergie an Punkt 3 und Punkt 4 in Figur 1 ist dann die resultierende elektrische Energie des Dehnungskreislaufs. Der Energiegewinn pro Zyklus berechnet sich dabei wie aus der Formel (2) ersichtlich:

$$\Delta W = \frac{1}{2} \cdot C_2 \cdot U_2^2 - \frac{1}{2} \cdot C_1 \cdot U_1^2 \qquad (2)$$

mit:

| | |
|---|---|
| $\Delta W$: | resultierende Elektrische Energie [J] |
| $C_2$: | Kapazität in entspannten Zustand [F] |
| $U_2$: | elektrische Spannung im entspannten Zustand [V] |
| $C_1$: | Kapazität in gespannten Zustand [F] |
| $U_1$: | elektrische Spannung im gespannten Zustand [V] |

wobei $C_1$ die Kapazität der elektroaktiven Folie am Maximum (Punkt 3) und $C_2$ die Kapazität der elektroaktiven Folie nach der Rückkehr in den ungedehnten (bzw. weniger gedehnten Zustand, Punkt 4) bedeuten und $U_1$ die Spannung der Folie im gespannten Zustand (Punkt 3) und $U_2$ die Spannung der Folie nach der Rückkehr in den ungedehnten (bzw. weniger gedehnten Zustand, Punkt 4) bedeuten. Der Energiegewinn lässt sich also im Schema der Figur 1 anhand der Erhöhung der elektrischen Feldstärke beim Weg von Punkt 3 nach Punkt 4 ablesen.

Die Erfindung soll nachstehend konkret anhand von zwei Ausführungsformen beschrieben werden.

In der ersten Ausführungsform wird eine Druckrohr-Vorrichtung eingesetzt, die nach Art einer Widderpumpe arbeitet und schematisch in **Figur 2** dargestellt ist. In Pfeilrichtung einströmendes Wasser durchströmt das Rohr 1. Wird das Schließventil 2 geschlossen, entsteht eine Druckwelle, die in Gegenrichtung zur Strömungsrichtung läuft. Um einen Druckstoß zu generieren, besitzt das Druckrohr einen Schließer 2. Bei Betätigung des Schließers kommt das Wasser zum Stillstand und generiert nach Gleichung (3)

$$\Delta p_{Druckstoß} = \rho_W \cdot v_\infty \cdot \frac{2 \cdot l_{Rohr}}{t_s} \qquad (3)$$

mit:

$\Delta p_{Druckstoß}$:    Druck durch Druckstoß [Pa]

$\rho_W$:    Dichte von Wasser [kg/m³]

$v_\infty$:    Geschwindigkeit im Druckrohr [m/s]

$l_{Rohr}$:    Länge des Rohres [m]

$t_s$:    Schließ-/Öffnungszeit des Ventils [s]

einen Druckstoß. Dabei bedeutet $v_\infty$ die Geschwindigkeit des Wassers im Rohr, und $\rho_W$ ist die Dichte des Wassers. Der sich aufbauende Druck gelangt in den Ausgleichsbehälter 3. Damit der Druck mehrerer Druckstöße aufaddiert werden kann, wird mithilfe eines Überdruckventils 4 der Rückfluss des Wassers verhindert. Der Ausgleichsbehälter 3 besitzt eine Öffnung, die mit einer elektroaktiven (dielektrischen) Elastomerfolie 5 überspannt ist. Beim ersten Druckstoß weicht die Folie in Richtung des geringeren Außendrucks aus und dehnt sich dabei nach außen. Die nächsten Druckstöße dehnen die Folie immer stärker, bis die gewünschte Dehnung erreicht ist. An diesem Punkt (dem Maximum oder einem gewünschten Optimum der Dehnung) wird die Folie mit elektrischer Ladung beaufschlagt, wie oben erläutert. Sodann wird das Ausgleichsventil 6 geöffnet, wodurch sich der Druck im Ausgleichsbehälter wieder abbaut und die Folie in ihre Nulllage relaxiert wird. In diesem entspannten Zustand wird der Folie elektrische Ladung entzogen, und der erhaltene Energiegewinn ΔW kann in einen Akkumulator oder einen Widerstand, der in den an die Elektroden der Elastomerfolie angeschlossenen Stromkreis angeschlossen ist, eingespeist werden. Ab hier erfolgt der Zyklus erneut. In dieser Figur ist die normale Wasseroberfläche als Linie 8 angedeutet.

In einer spezifischen Weiterbildung dieser Ausführungsform wird der außenseitig an der Folie befindliche Raum einem Unterdruck ausgesetzt, der die Dehnung der Folie weiter unterstützt bzw. eine noch stärkere Dehnung hervorruft. Dies ist beispielsweise durch eine Venturi-Düse realisierbar, durch die wie oben beschrieben ein Unterdruck erzeugt wird, der an der anderen Seite der Folie anliegt.

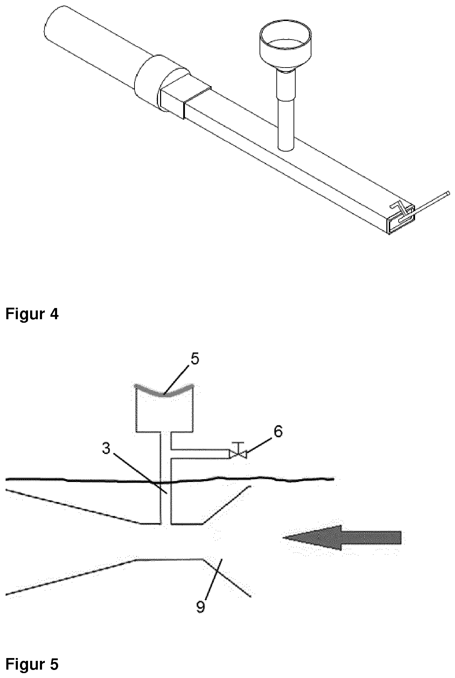

Der Querschnitt des Rohres 1 kann eine beliebige Form besitzen. So kann z.B. ein rundes, ein ovales oder ein eckiges (quadratisches oder rechteckiges oder vieleckiges) Rohr verwendet werden. In den **Figuren 3 und 4** ist eine Variante dargestellt, in der das Wasser in ein rundes Rohr 1a einströmt. Das Rohr geht sodann in ein eckiges Rohr 1c über. Diese Figuren zeigen auch eine spezifische Möglichkeit, wie die Folie die Öffnung im Ausgleichsraum überspannen kann. Hier wird eine Halterung 7 verwendet, die auf die Öffnung im Ausgleichsraum 3 aufgesetzt ist. Dies hat den Vorteil, dass der Durchmesser der Folie größer gewählt werden kann als der Durchmesser der Öffnung im Ausgleichsraum, was die Effektivität der Vorrichtung verbessert. Die Halterung wird in beliebiger Weise mit der Folie bespannt, beispielsweise mit Hilfe einer Klemmvorrichtung. Eine weitere Verbesserung kann dadurch erreicht werden, dass nicht nur eine mit der Folie bespannte Halterung in der Öffnung des Ausgleichsraums angeordnet wird, sondern ein sich einfach oder mehrfach verzweigendes Rohr, dessen Verzweigungen jeweils endseitig eine mit der Folie 5 bespannte Halterung 7 aufweisen. Auf diese Weise kann ein wesentlich höherer Druck im Ausgleichsbehälter aufgebaut und genutzt werden.

In einer zweiten Ausführungsform kommt ein Venturi-Druckrohr zum Einsatz. Dieses ist prinzipiell in **Figur 5** gezeigt. Diese Figur zeigt eine Venturi-Variante, bei der Wasser eines fließenden Gewässers in Pfeilrichtung in das Rohr 1 eintritt und durch die Verengung 9 des Rohrquerschnitts bis zur Mitte hin beschleunigt wird. Der Ausgleichsraum 3 benötigt in dieser Ausführungsform kein Überdruckventil. Als einziges Ventil wird ein Ausgleichsventil 6 benötigt. Die höhere Durchflussgeschwindigkeit im Bereich 9 des verengten Rohres verursacht bei geschlossenem Ventil einen Unterdruck, der die Folie 5 ansaugt und den Wasserspiegel im Inneren des Ausgleichsbehälters senkt. Hat die elektroaktive Folie ihre Maximaldehnung bzw. einen durch einen Sensor gemessenen unteren Totpunkt erreicht, wird das Ventil 6 geöffnet, und ein Medium wie z.B. Luft oder Wasser strömt ein. Beim Ansaugen von Wasser befüllt sich der entstandene Hohlraum mit Wasser und reduziert somit den Unterdruck. Ist das angesaugte Medium Luft, bleibt die Wassersäule auf der angesaugten Höhe und die Folie wird durch den Druckausgleich der Luft entspannt, wobei diese wieder in ihre Nulllage zurückgeht. Beim Schließen des Ventils wird die Folie vom Unterdruck in der Verengung 9 des Rohres wiederum angesaugt, und der Kreislauf beginnt von neuen.

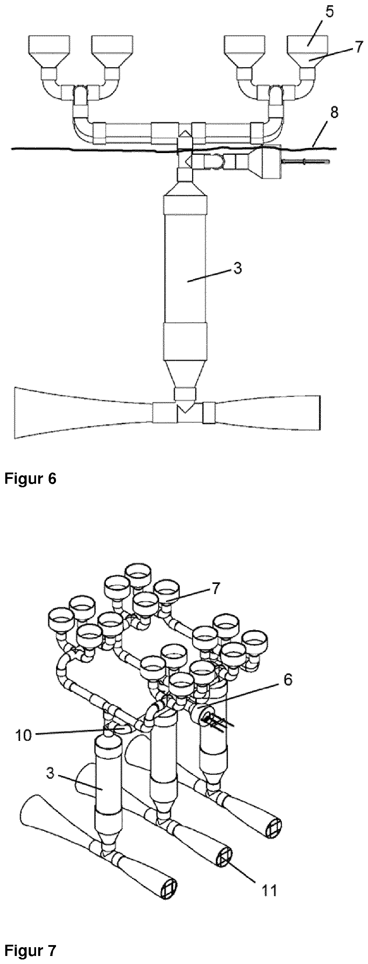

In **Figur 6** ist eine Ausgestaltung dieser Ausführungsform mit einem Venturirohr und einem Ausgleichsraum 3 gezeigt, in dessen Öffnung ein sich zweimal in zwei Zweige verzweigendes Rohr eingesetzt ist. Jedes der vier Rohrenden besitzt eine Öffnung, in die eine mit dielektrischer Elastomerfolie 5 überspannte Halterung 7 eingesetzt ist. Die Wasserlinie 8 sollte vorzugsweise kurz unter der ersten waagrechten Verzweigung des Rohrs liegen, so dass sich das Ventil 6 noch unterhalb der Wasseroberfläche befindet.

Bei der Vorrichtung, die in der **Figur 7** gezeigt ist, handelt es sich um eine Weiterentwicklung der in der Figur 6 gezeigten Ausführungsform. Dabei besteht die Druckstoßvorrichtung aus drei Venturi-Rohren mit sich verengendem Querschnitt, drei Ausgleichsräumen 3, einem Versorgungsrohr 10, das die drei Ausgleichsräume miteinander verbindet, sechzehn mit dielektrischer Elastomerfolie überspannten Halterungen 7 und einem Ventil 6. Die Lage dieser Vorrichtung im Wasser sollte analog der für die Vorrichtung der Figur 6 gezeigten sein.

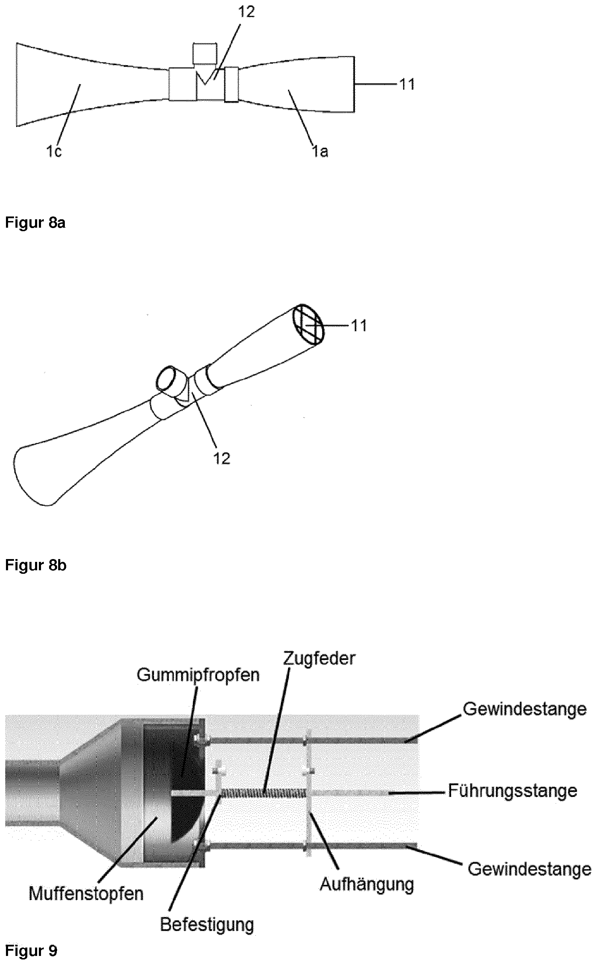

Wie aus den **Figuren 8a und 8b** ersichtlich, kann das Venturirohr - wie natürlich jedes verwendbare Druckrohr - mit einem Fanggitter 11 versehen sein, um den Eintrag von Blättern oder sonstigen vom Wasser mitgeschleppten Gegenständen zu verhindern. Der Ausgleichsbehälter 3 ist über eine Abzweigung zugänglich. Der Auslauf des Wassers erfolgt durch ein Rohrstück 1c, das als Diffusor bezeichnet wird.

Das Wasser strömt durch die Venturi-Düsen und erzeugt dadurch bei geschlossenem Ventil in den Ausgleichsbehältern einen Unterdruck. Der Unterdruck sorgt wiederum dafür, dass die auf den Halterungen montierten Folien eingesaugt werden. Das hierfür notwendige Volumen wird im Ausgleichsbehälter kompensiert. Beim Erreichen des unteren Totpunkts im Zustand der maximalen Dehnung öffnet das Ventil, und Wasser befüllt die Ausgleichsbehälter über das Versorgungsrohr. Der Druckausgleich sorgt für ein Entspannen der Folien bis zum oberen Totpunkt. Dort schließt das Ventil, und der Zyklus beginnt erneut. Das Vorsehen von drei Venturi-Düsen hat den Zweck, das angesaugte Wasservolumen möglichst schnell weiterzuführen. Damit ist eine höhere Frequenz zur Foliendehnung realisierbar als im Vergleich mit nur einer Düse. Der Aufbau der Figur 7 nutzt die Verwendung von 16 dielektrischen Elastomerfolien. Zusätzliche Halterungen können für größere Anwendungsbereiche realisiert werden, die zum Zwecke einer weiteren Erhöhung der Leistung gegebenenfalls auch mehrlagig mit dielektrischen Elastomerfolien überspannt werden können. Der Wirkungsgrad als Verhältnis zwischen angesaugtem Fluid aus dem Ausgleichsbehälter und dem durch die Venturi-Düse strömenden Fluid erhöht sich mit ansteigender Geschwindigkeit am Eintritt in den Konus. Ein Wert bis annähernd 0,25 kann dabei erreicht werden.

Im gezeigten Beispiel für diese spezifische Ausführungsform sorgen mehrere Aluminiumprofile, die mit Schellen an statisch wichtigen Rohrpunkten im Abstand von 30 - 40 cm montiert sind, für eine ausreichend große Stabilität des Aufbaus. Diese Profile erlauben auch eine zusätzliche Montage von Schwimmkörpern, damit bei Verwendung in einem fließenden Gewässer die Folien nicht unter die Wasseroberfläche geraten können, auch wenn der Wasserspiegel über seiner Normallinie liegt. Die komplette Vorrichtung wird, wie aus Figur 6 ersichtlich, soweit versenkt, bis das Ventil unter der Wasseroberfläche und die Halterungen darüber liegen. Die Druckrohrvorrichtung kann durch Seile, die entweder am Ufer oder am Flussgrund verankert sind, fixiert werden. Dabei wird die Druckrohrvorrichtung schwimmend auf ein und derselben Position im Wasser gehalten. In Fällen, in denen keine Schwankungen der Wasserhöhe zu befürchten sind, kann die Vorrichtung statt dessen auch durch Streben befestigt werden, die starr an den Profilen montiert werden.

Die erfindungsgemäße Druckrohrvorrichtung ermöglicht es, selbst bei kleinsten Strömungsgeschwindigkeiten die kinetische Energie des fließenden Wassers in Nutzenergie umzuwandeln. Dabei können minimale Strömungen von kleinen Flüssen und Bächen bis hin zu starken Strömungen in Meerestiefen genutzt werden. Ein Schwerpunkt liegt jedoch auf der Nutzung von sonst ungenutzten Strömungen in Flüssen und Bächen und ermöglicht hierbei die Umwandlung der kinetischen Energie in Nutzenergie, wobei kontinuierliche Schwankungen in der Strömungsgeschwindigkeit, wie sie des Öfteren vorkommen, durch die konstruktive Ausgestaltung der Vorrichtung kein Problem darstellen, da je nach Intensität der Strömungsgeschwindigkeit die dielektrischen Elastomerfolien weniger oder stärker gedehnt werden.

Ein Vorteil der vorliegenden Erfindung liegt unter anderem in der relativ einfachen konstruktiven Ausgestaltung der erfindungsgemäßen Druckrohrvorrichtung. Die zu verwendenden mechanischen Bauteile sind relativ einfach konstruiert und daher kostengünstig herstellbar. Sie können aus Metall oder Kunststoff gefertigt werden. Es müssen keine wartungsintensiven Bauteile wie z.B. Pumpvorrichtungen oder Turbinen verbaut werden, welche eine kontinuierliche Überprüfung voraussetzen würden, um eine fehlerfreie Funktion zu garantieren. Durch die erfindungsgemäße Ausgestaltung ist es möglich, auf einfachstem Wege die Strömung, beispielsweise eines Flusses, zur Energieumwandlung zu nutzen. Darüber hinaus wird durch die Ausgestaltung der Druckrohrvorrichtung Flora und Fauna nicht beeinträchtigt und eine Integration in das Umfeld kann umweltfreundlich und optisch schonend erfolgen. Da keine mechanischen Elemente verwendet werden, können Beschädigungen von Flora und Fauna, wie sie z.B. durch Turbinen entstehen, ausgeschlossen werden.

Ein besonderer Vorteil der erfindungsgemäßen Druckrohrvorrichtung ist die mögliche Selbstregelung der Vorrichtung durch ein spezielles Ventil, das es erlaubt, die entstehenden Druckunterschiede optimal zu nutzen und zu regeln. Das selbstregelnde Ventil kann dabei den Unterdruck über einen Wassereinlauf oder über die Luft selbstständig ausgleichen und garantiert somit einen kontinuierlichen Dehnungskreislauf der Elastomerfolie.

Ein solches Ventil ist in Figur 9 gezeigt. Es steuert die Dehnung der Folien. Ist es geschlossen, kann kein Wasser durch das Versorgungsrohr in die Ausgleichsbehälter fließen. Beim Erreichen des Druckminimums bei maximaler Foliendehnung öffnet das Ventil, und Wasser strömt durch das Versorgungsrohr. Der Wasserspiegel in den Ausgleichsbehältern steigt daraufhin wieder an.

Die Zugfeder, die den Gummipfropfen an den Rand des Muffenstopfens drückt, dehnt sich, wenn der Druck im Versorgungsrohr minimal wird. Das Ventil ist somit geöffnet. Steigt der Druck im Versorgungsrohr, schließt sich das Ventil durch die Rückstellkraft der Feder. Je nach Vorspannung ist die Rückstellkraft an den generierten Druck einstellbar. Die Feder ist mit der Befestigung und der Aufhängung fest verbunden. Am vorderen Ende, beim Gummipfropfen der Führungsstange, befindet sich ein Gewinde, mit dem die Befestigung verschraubt ist. Zwischen Führungsstange und Aufhängung ist eine Loslagerung vorgesehen, damit der Pfropfen axial verschiebbar bleibt. Die Vorspannung der Feder ist durch die frei positionierbare Verschraubung der Aufhängung an den Gewindestangen einstellbar. Das Ventil kann entweder manuell oder automatisch betrieben werden.

Durch die kompakte Bauform der erfindungsgemäßen Druckrohrvorrichtung ist es möglich, diese leicht auf- und wieder abzubauen, was ein hohes Maß an Mobilität garantiert. Den Platzverhältnissen entsprechend kann die Ausführungsform in ihrer Größe stark variieren. Im Bereich von Flüssen und Bächen werden die Dimensionen der erfindungsgemäßen Druckrohrvorrichtung daher eher kleiner proportioniert sein, wobei bei Ausführungsformen, die ihre Anwendung in Meerestiefe finden sollen, weitaus größere Aufbauten denkbar sind, um dementsprechend einen hohen Umsatz an Energieumwandlungen zu generieren. Bei der Anwendung in Meerestiefen wird der Ausgleichsraum 3 in einer so großen Länge ausgeführt und/oder es werden zusätzliche Verbindungs- bzw. Steigleitungen angeordnet, dass die Folien trotz der Anordnung der Druckrohre in der Tiefe oberhalb des Wasserspiegels liegen. Es ist nämlich von Vorteil, wenn sich die Folien stets über der Wasseroberfläche befinden, um aufwändige Isolierungsmaßnahmen vermeiden zu können.

Zu den Anwendungsgebieten der Erfindung zählen unter anderem mobile Energieumwandlungsstationen, wobei die umgewandelte Nutzenergie in einem Akkumulator gespeichert oder unmittelbar durch Einspeisung in ein lokales Netz dem Anwender direkt zur Verfügung steht, um sie beispielsweise beim Camping zu nutzen. Die Erfindung lässt sich jedoch auch als Gezeitenkraftwerk, als Kraftwerk für Flüsse und Bäche mit geringer Strömungsgeschwindigkeit oder auch in der Elektromobilität nutzen, indem z.B. Anlieger elektrische Energie aus einem lokalen Netz oder einem in diesem Netz befindlichen Akkumulator zur Aufladung eines Elektroautos nutzen. Das Hauptanwendungsgebiet ist jedoch die Energieumwandlung in Nutzenergie und Einspeisung dieser Energie in das allgemeine Netz.

**Patentansprüche**

1. Druckrohrvorrichtung, umfassend die folgenden Komponenten:

    (a) ein Rohr (1) zum waagrechten Anordnen in einem Gewässer mit

        - einem ersten Abschnitt (1a), der das Einströmen von fließendem Wasser ermöglicht, und
        - einem zweiten Abschnitt (1b), der so ausgestaltet ist, dass einströmendes Wasser einer permanenten oder intermittierenden Druckveränderung unterworfen werden kann,

    (b) mindestens einen Ausgleichsbehälter (3), der mit einem dritten Abschnitt (1c) des Rohres derart verbunden ist, dass er bei waagrechter Anordnung des Rohres nach oben ausgerichtet werden kann, und der

        - mindestens eine Öffnung, die dichtend mit einer dielektrischen Elastomerfolie (5) verschlossen ist, und
        - ein Ausgleichsventil (6) aufweist.

2. Druckrohrvorrichtung nach Anspruch 1, weiterhin umfassend einen Stromregelkreis mit einer Energiequelle und einer Energiespeichereinheit oder einem Verbraucher, wobei der Stromregelkreis ausgelegt ist, um die dielektrische Elastomerfolie mit elektrischer Energie zu beaufschlagen und darin gespeicherte Energie in die Energiespeichereinheit zu übertragen.

3. Druckrohrvorrichtung nach Anspruch 1 oder 2, worin

- das Rohr (1) endseitig des zweiten Abschnitts (1b) mit einem Schließventil (2) versehen ist, mit dem sich ein Druckstoß im Rohr herbeiführen lässt,
- der dritte Abschnitt (1c) des Rohres zwischen dem ersten Abschnitt (1a) und dem zweiten Abschnitt (1b) angeordnet ist und
- worin der Ausgleichsbehälter (3) ein Überdruckventil (4) aufweist, um den durch mehrere Druckstöße aufgebauten Überdruck im Ausgleichsbehälter zu akkumulieren.

4. Druckrohrvorrichtung nach Anspruch 1 oder 2, worin

- der zweite Abschnitt (1b) einen sich verjüngenden Querschnitt aufweist,
- der dritte Abschnitt (1c) stromabwärts des zweiten Abschnitts (1b) angeordnet ist.

5. Druckrohrvorrichtung nach einem der voranstehenden Ansprüche, weiterhin umfassend eine Einrichtung zum Bestimmen des Dehnungszustands der Elastomerfolie.

6. Druckrohrvorrichtung nach einem der voranstehenden Ansprüche, worin auf die Öffnung im Ausgleichsraum (3) dichtend eine Halterung (7) aufgesetzt ist, deren Querschnitt größer ist als derjenige der Öffnung und die dichtend mit dielektrischer Elastomerfolie (5) verschlossen ist.

7. Druckvorrichtung nach Anspruch 6, worin auf die Öffnung im Ausgleichsraum (3) dichtend ein sich einfach oder mehrfach verzweigendes Rohr (8) aufgesetzt ist, dessen Verzweigungen jeweils endseitig dichtend in eine Halterung (7) münden, die dichtend mit dielektrischer Elastomerfolie verschlossen ist.

8. Druckvorrichtung nach einem der voranstehenden Ansprüche, worin das Ausgleichsventil (6) ein selbstregelndes Ventil ist, das manuell oder automatisch betrieben wird.

**Claims**

1. A pressure tube apparatus comprising the following components:

   (a) a tube (1) for horizontal arrangement in a body of water, comprising:

   - a first portion (1a) allowing inflow of flowing water, and
   - a second portion (1b), which is configured so that inflowing water can be subjected to a permanent or intermittent pressure change,

   (b) at least one compensation container (3), which is connected to a third portion (1c) of the tube so that, in a horizontal arrangement of the tube, it can be oriented upwardly and having

   - at least one opening sealed with a dielectric elastomeric film (5) and
   - an equalizer valve (6).

2. The pressure tube apparatus according to claim 1, further comprising a current loop having a power source and an energy storage unit or a load, wherein the power control loop is configured to apply electrical energy to the dielectric elastomeric film and to transfer energy stored therein to the energy storage unit.

3. The pressure tube device according to claim 1 or 2, wherein

   - at the end of the second section (1b), the tube (1) is provided with a closing valve (2) capable of producing a pressure surge in the tube,
   - the third portion (1c) of the tube is arranged between the first portion (1a) and the second portion (1b) and
   - wherein the compensation container (3) has a pressure relief valve (4) to accumulate the pressure built up by a plurality of pressure surges in the compensation container.

4. The pressure tube device according to claim 1 or 2, wherein

   - the second portion (1b) has a tapered cross section,

- the third portion (1c) is arranged downstream of the second portion (1b).

5. The pressure tube apparatus according to any one of the preceding claims, further comprising means for determining the elongation state of the elastomeric film.

6. The pressure tube device according to one of the preceding claims, in which a holder (7) is sealingly mounted on the opening in the compensation container (3), whose cross-section is greater than that of the opening and which is sealingly closed with a dielectric elastomer film (5).

7. The pressure tube device according to claim 6, wherein a single or multiple branching tube (8) is sealingly mounted on the opening in the compensation container (3), the branches of which terminate sealingly in a holder (7) which is sealingly closed with a dielectric elastomer film.

8. The pressure tube device according to any one of the preceding claims, wherein the equalizer valve (6) is a self-regulating valve which is operated manually or automatically.


**Revendications**

1. Dispositif de tube sous pression, comprenant les composants suivants:

(a) un tube (1) à disposer horizontalement dans une masse d'eau, avec

- une première section (1a), qui permet l'entrée d'un flux d'eau, et
- une deuxième section (1b), qui est configurée de telle manière que l'eau entrante puisse être soumise à une variation de pression permanente ou intermittente,

(b) au moins un réservoir d'équilibrage (3), qui est raccordé à une troisième section (1c) du tube, de telle manière qu'il puisse être orienté vers le haut lorsque le tube est disposé horizontalement, et qui présente

- au moins une ouverture, qui est fermée de façon étanche avec une feuille élastomère diélectrique (5), et
- une soupape d'équilibrage (6).

2. Dispositif de tube sous pression selon la revendication 1, comprenant en outre un circuit de régulation de courant avec une source d'énergie et une unité d'accumulation d'énergie ou un consommateur, dans lequel le circuit de régulation de courant est conçu pour exposer la feuille élastomère diélectrique à de l'énergie électrique et pour transmettre l'énergie accumulée dans celle-ci à l'unité d'accumulation d'énergie.

3. Dispositif de tube sous pression selon la revendication 1 ou 2, dans lequel

- le tube (1) est muni à l'extrémité de la deuxième section (1b) d'une soupape de fermeture (2), avec laquelle un choc de pression peut être produit dans le tube,
- la troisième section (1c) du tube est placée entre la première section (1a) et la deuxième section (1b), et
- dans lequel le réservoir d'équilibrage (3) présente une soupape de surpression (4), destinée à accumuler dans le réservoir d'équilibrage la surpression générée par plusieurs chocs de pression.

4. Dispositif de tube sous pression selon la revendication 1 ou 2, dans lequel

- la deuxième section (1b) présente une section transversale décroissante,
- la troisième section (1c) est disposée en aval de la deuxième section (1b).

5. Dispositif de tube sous pression selon l'une quelconque des revendications précédentes, comprenant en outre un dispositif pour déterminer l'état d'allongement de la feuille élastomère.

6. Dispositif de tube sous pression selon l'une quelconque des revendications précédentes, dans lequel un support (7) est disposé de façon étanche sur l'ouverture dans la chambre d'équilibrage (3), support dont la section transversale est plus grande que celle de l'ouverture et qui est fermé de façon étanche par la feuille élastomère diélectrique (5).

7.  Dispositif de tube sous pression selon la revendication 6, dans lequel un tube ramifié une fois ou plusieurs fois (8) est posé de façon étanche sur l'ouverture dans la chambre d'équilibrage (3), et dont les branches débouchent respectivement de façon étanche en extrémité dans un support (7), qui est fermé de façon étanche avec une feuille élastomère diélectrique.

8.  Dispositif de tube sous pression selon l'une quelconque des revendications précédentes, dans lequel la soupape d'équilibrage (6) est une soupape autorégulatrice, que l'on fait fonctionner manuellement ou automatiquement.

Figur 1

Figur 2

Figur 3

**Figur 4**

**Figur 5**

**Figur 6**

**Figur 7**

12

11

1c

1a

Figur 8a

11

12

Figur 8b

Gummipfropfen

Zugfeder

Gewindestange

Führungsstange

Muffenstopfen

Aufhängung

Gewindestange

Befestigung

Figur 9

**IN DER BESCHREIBUNG AUFGEFÜHRTE DOKUMENTE**

**In der Beschreibung aufgeführte Patentdokumente**

- WO 2010136100 A
- EP 2256337 A1
- DE 102009053393 A1
- DE 102006040101 A1
- DE 1020100180378 A1